# EUROPÄISCHE PATENTSCHRIFT

(11) **EP 4 515 096 B1**
(45) Veröffentlichungstag und Bekanntmachung des Hinweises auf die Patenterteilung: **25.03.2026**
(21) Anmeldenummer: 22725442.2
(22) Anmeldetag: 25.04.2022
(51) Int. Cl.: F02D 9/04, F02D 9/10, F02M 26/70, F16K 1/22, F16C 17/20

(54) **KLAPPENVORRICHTUNG FÜR EINEN VERBRENNUNGSMOTOR**
FLAP DEVICE FOR AN INTERNAL COMBUSTION ENGINE
DISPOSITIF À VOLETS POUR UN MOTEUR À COMBUSTION INTERNE

(43) Veröffentlichungstag der Anmeldung: 05.03.2025
(73) Patentinhaber: Pierburg GmbH, 41460 Neuss (DE)
(72) Erfinder: CAPAN, Alpay, 41460 Neuss (DE); DELLEN, Franz, 41460 Neuss (DE); ANTONI, Christian, 41460 Neuss (DE); VONAL, Ahu, 41460 Neuss (DE); ÖZCAN, Hasan, 41460 Neuss (DE)
(74) Vertreter: Eisenführ Speiser
(86) Internationale Anmeldenummer: PCT/EP2022/060895
(87) Internationale Veröffentlichungsnummer: WO 2023/208314

(56) Entgegenhaltungen:
- WO-A1-2017/182233
- DE-A1- 10 240 316
- US-A- 2 529 572

## Beschreibung

Die Erfindung betrifft eine Klappenvorrichtung für einen Verbrennungsmotor, mit einem Strömungsgehäuse, welches mindestens einen Strömungskanal begrenzt, einer Klappenwelle, welche radial und axial am Strömungsgehäuse gelagert ist, und mindestens einem Klappenkörper, welcher an der Klappenwelle gelagert ist und im Strömungskanal angeordnet ist, wobei der Klappenkörper gemeinsam mit der Klappenwelle um eine Längsachse der Klappenwelle zwischen unterschiedlichen Stellungen verdrehbar ist.

Derartige Klappenvorrichtungen werden beispielsweise als Abgasstauklappen oder als Abgasrückführventile in Niederdruck- oder Hochdruckabgaskreisläufen eingesetzt. Auch ist es bekannt, derartige Klappenvorrichtungen in einem Luftansaugkanal eines Verbrennungsmotors, insbesondere als Drosselklappe, vorzusehen.

Eine derartige Klappenvorrichtung offenbart beispielsweise die WO 2017/182233 A1, wobei es kein redundantes, verschleißkompensierendes zweites Axiallager, das erst im Verschleißfall des ersten Axiallagers zugeschaltet wird offenbart.

Die Klappenvorrichtung umfasst ein Abgasströmungsgehäuse, welches einen Abgasströmungskanal begrenzt. In dem Abgasströmungskanal ist ein Klappenkörper angeordnet, welcher an einer drehbar an dem Abgasströmungsgehäuse gelagerten und in den Abgasströmungskanal ragenden Klappenwelle befestigt ist. Zur drehbaren Lagerung sind zwei Radiallager vorgesehen, welche fluchtend zueinander und an den entgegengesetzten Seiten des Klappenkörpers angeordnet sind. Die Klappenwelle ist außerdem über ein Axiallager am Abgasströmungsgehäuse axial gelagert, wobei an der Klappenwelle ein Gegenlagerelement des Axiallagers befestigt ist und an dem Strömungsgehäuse ein Lagerelement des Axiallagers befestigt ist. Die Klappenwelle ist über ein Federelement in Axialrichtung belastet, wodurch das Gegenlagerelement mit einer axialen Lagerfläche gegen eine axiale Lagerfläche des Lagerelements gedrückt wird.

Nachteilig an einer derartigen Ausgestaltung der Klappenvorrichtung ist, dass die Lagerflächen des Lagerelements und des Gegenlagerelements mit fortschreitendem Betrieb verschleißen. Durch den Verschleiß des Lagerelements und/oder des Gegenlagerelements, d.h. durch den Materialabtrag an den Lagerflächen des Lagerelements und/oder des Gegenlagerelements, verlagert sich die Klappenwelle und dadurch auch der an der Klappenwelle befestigte Klappenkörper derart in Axialrichtung, dass der Klappenkörper nicht mehr zentral in dem Strömungskanal angeordnet ist. Dies kann zu einer erhöhten Leckage im geschlossenen Zustand des Klappenkörpers und zu einem Klemmen des Klappenkörpers bei der Verstellung führen.

Es stellt sich daher die Aufgabe, eine Klappenvorrichtung für einen Verbrennungsmotor eines Kraftfahrzeugs bereitzustellen, bei welcher die verschleißbedingte Axialverlagerung der Klappenwelle und des Klappenkörpers reduziert werden kann und dadurch über die gesamte Lebensdauer eine zuverlässige Abdichtung in der geschlossenen Stellung des Klappenkörpers gewährleistet und ein Klemmen des Klappenkörpers bei der Verstellung verhindert werden kann.

Diese Aufgabe wird durch eine Klappenvorrichtung für einen Verbrennungsmotor eines Kraftfahrzeugs mit den Merkmalen des Anspruchs 1 gelöst.

Zur axialen Lagerung der Klappenwelle weist die Klappenvorrichtung ein erstes Axiallager und ein zweites Axiallager auf. Beide Axiallager weisen jeweils ein Lagerelement und ein Gegenlagerelement auf, wobei das Lagerelement am Strömungsgehäuse vorgesehen ist, insbesondere am Strömungsgehäuse befestigt ist oder einstückig mit dem Strömungsgehäuse hergestellt ist, und das Gegenlagerelement an der Klappenwelle vorgesehen ist, d.h. an der Klappenwelle befestigt oder mit der Klappenwelle einstückig hergestellt ist.

Im Neuzustand der Klappenvorrichtung liegt das Gegenlagerelement des ersten Axiallagers axial an dem entsprechenden Lagerelement axial an, wobei das Gegenlagerelement des zweiten Axiallagers zum entsprechenden Lagerelement beabstandet angeordnet ist, d.h. zwischen dem Gegenlagerelement und dem Lagerelement des zweiten Axiallagers ist ein Spalt mit einer relativ geringen Spaltbreite vorhanden. Damit erfolgt im Neuzustand der Klappenvorrichtung die axiale Lagerung der Klappenwelle ausschließlich durch das erste Axiallager. Im Laufe des Betriebs der Klappenvorrichtung verschleißen die relativ zueinander bewegenden und aneinander abgleitenden Lagerelemente, d.h. das Lagerelement und/oder das Gegenlagerelement des ersten Axiallagers, wodurch sich die Klappenwelle um den Verschleißbetrag in Axialrichtung verlagert. Dadurch verlagert sich auch die Klappenwelle und das an der Klappenwelle vorgesehene Gegenlagerelement des zweiten Axiallagers. Sobald der Verschleißbetrag des ersten Axiallagers die Spaltbreite des zwischen dem Lagerelement und dem Gegenlagerelement des zweiten Axiallagers vorliegenden Spalts übersteigt, kommt es zur Anlage zwischen dem Gegenlagerelement des zweiten Axiallagers an dem Lagerelement des zweiten Axiallagers, wodurch die Klappenwelle zusätzlich durch das zweite Axiallager axial gelagert wird.

Auf diese Weise kann die Verlagerung der Klappenwelle aufgrund eines Verschleißes des ersten Axiallagers reduziert werden und dadurch eine unerwünschte hohe Leckage im geschlossenen Zustand des Klappenkörpers und ein Klemmen der Klappenkörpers bei einer Verstellung verhindert werden. Dadurch kann die Lebensdauer der Klappenvorrichtung erhöht werden bzw. ein vorzeitiger Ausfall der Klappenvorrichtung vermieden werden.

Vorzugsweise ist ein Radiallager zur radialen Lagerung der Klappenwelle vorgesehen, welches das Lagerelement des zweiten Axiallagers bildet, wobei eine Stirnseite des Radiallagers mit einer axialen Anlagefläche des Gegenlagerelements des zweiten Axiallagers zusammenwirkt. Dadurch kann eine separate Komponente, welche das Lagerelement bildet, eingespart werden und auf diese Weise die Montage vereinfacht und die Montage- sowie Herstellungskosten reduziert werden.

In einer bevorzugten Ausgestaltung ist das Radiallager als Gleitlager ausgeführt und umfasst eine Lagerhülse, wobei die Lagerhülse an dem Strömungsgehäuse fest angeordnet ist, insbesondere in Axialrichtung und in Radialrichtung am Strömungsgehäuse befestigt ist. Die ringförmige Stirnfläche der Lagerhülse dient der Axiallagerung der Klappenwelle. Auf diese Weise kann die Axiallagerung auf eine einfache und kostengünstige Weise ausgeführt werden.

Vorzugsweise bildet der Klappenkörper das Gegenlagerelement des zweiten Axiallagers, wobei der Klappenkörper die dem Lagerelement des zweiten Axiallagers axial zugewandte Anlagefläche aufweist. Dadurch ist auch keine separate Komponente zur Bereitstellung des Gegenlagerelements erforderlich, wodurch der Montage- und Herstellungsaufwand reduziert werden kann. Hierzu umfasst der Klappenkörper eine ringförmige Anlagefläche, welche einen zumindest geringfügig kleineren Durchmesser als das Lagerelement aufweist, wodurch der Klappenkörper mit der Anlagefläche ausschließlich an dem Lagerelement anliegt.

In einer bevorzugten Ausgestaltung weist das Gegenlagerelement an einer dem Lagerelement zugewandten Seite ein Keramikelement auf, wodurch die Gleitreibung des ersten Axiallagers reduziert werden kann und ein Leckagestrom ausgehend vom Strömungskanal durch das erste Axiallager reduziert werden kann. Alternativ kann das Keramikelement auch an dem Lagerelement vorgesehen sein und am Gegenlagerelement abgleiten.

In einer bevorzugten Ausgestaltung weist das Keramikelement eine konische Anlagefläche auf, welche an einer am Lagerelement vorgesehenen, konischen Gegenanlagefläche anliegt. Dadurch kann die Anlagefläche zwischen dem Keramikelement und dem Lagerelement oder dem Gegenlagerelement vergrößert werden, wodurch die Abdichtung nochmals verbessert wird und damit der Leckagestrom aus dem Strömungskanal reduziert wird.

Vorzugsweise sind an der Klappenwelle ein erster Klappenkörper und ein zweiter Klappenkörper befestigt, wobei der erste Klappenkörper in einem ersten, durch das Strömungsgehäuse begrenzten Strömungskanal angeordnet ist und der zweite Klappenkörper in einem zweiten, durch das Strömungsgehäuse begrenzten Strömungskanal angeordnet ist, wobei ein drittes Axiallager vorgesehen ist, welches derart ausgeführt ist, dass das Gegenlagerelement und das Lagerelement des dritten Axiallagers zunächst voneinander beabstandet sind und erst bei einem fortgeschrittenen Verschleiß der Lagerelemente und/oder der Gegenlagerelemente des ersten Axiallagers und des zweiten Axiallagers und einer durch den Verschleiß verursachten Axialverlagerung der Klappenwelle und des Gegenlagerelements des dritten Axiallagers aneinander anliegen. Zwischen dem Gegenlagerelement und dem Lagerelement des dritten Axiallagers ist im Neuzustand ein Spalt vorhanden, welcher eine größere Spaltbreite als der Spalt zwischen dem Lagerelement und dem Gegenlagerelement des zweiten Axiallagers aufweist. Das Gegenlagerelement des dritten Axiallagers dient erst der zusätzlichen Axiallagerung der Klappenwelle, wenn die Lagerelemente und/oder Gegenlagerelemente des ersten Axiallagers und des zweiten Axiallagers derart verschlissen sind und die Klappenwelle aufgrund des Verschleißes derart verlagert ist, dass der Spalt zwischen dem Gegenlagerelement und dem Lagerelement des dritten Axiallagers nicht mehr vorhanden ist. Auf diese Weise kann die Lebensdauer der Klappenvorrichtung nochmals verlängert werden.

Vorzugsweise ist ein zweites Radiallager vorgesehen, wobei das zweite Radiallager das Lagerelement des dritten Axiallagers bildet und der zweite Klappenkörper das Gegenlagerelement des dritten Axiallagers bildet, wobei eine axiale Anlagefläche des Klappenkörpers mit einer dem Klappenkörper zugewandten, axialen Anlagefläche des Radiallagers zusammenwirkt. Dadurch sind auch zur Bereitstellung des dritten Axiallagers keine zusätzlichen Komponenten erforderlich, wodurch der Montage- und Herstellungsaufwand reduziert werden kann.

In einer bevorzugten Ausgestaltung ist ein drittes Radiallager vorgesehen, wobei der erste Klappenkörper axial zwischen dem ersten Radiallager und dem zweiten Radiallager angeordnet ist und der zweite Klappenkörper axial zwischen dem zweiten Radiallager und dem dritten Radiallager angeordnet ist. Dadurch kann die relativ lange Klappenwelle mit zwei Klappenkörpern zuverlässig radial gelagert werden.

In einer bevorzugten Ausgestaltung ist an einem aus dem Strömungsgehäuse herausragenden Ende ein Federaufnahmeelement befestigt, wobei zwischen dem Federaufnahmeelement und dem Strömungsgehäuse ein Federelement derart vorgespannt angeordnet ist, dass die Gegenlagerelemente axial in Richtung der Lagerelemente der Axiallager belastet werden. Dadurch kann eine zuverlässige Axiallagerung der Klappenwelle gewährleistet werden.

Vorzugsweise ist der Strömungskanal ein Abgasströmungskanal, wobei das durch den Abgasströmungskanal strömendes Abgas eine relativ hohe Temperatur von mehreren 100 °C aufweist. Die im Neuzustand der Klappenvorrichtung vorliegenden Spalte zwischen den Lagerelementen und den Gegenlagerelementen des zweiten Axiallagers und des dritten Axiallagers liegen auch bei hohen Temperaturen des Abgases und dadurch verursachte Wärmedehnungen vor, so dass im Neuzustand der Klappenvorrichtung die Klappenwelle ausschließlich durch das erste Axiallager axial gelagert ist und erst bei einem fortgeschritten Verschleiß des ersten Axiallagers die anderen Axiallager der Axiallagerung der Klappenwelle dienen.

Damit wird eine Klappenvorrichtung für einen Verbrennungsmotor bereitgestellt, bei welcher eine verschleißbedingte Axialverlagerung der Klappenwelle reduziert werden und dadurch eine unerwünschte, hohe Leckage im geschlossenen Zustand des Klappenkörpers und ein Klemmen der Klappenkörpers bei einer Verstellung verhindert werden kann. Dadurch kann die Lebensdauer der Klappenvorrichtung erhöht werden bzw. ein vorzeitiger Ausfall der Klappenvorrichtung vermieden werden.

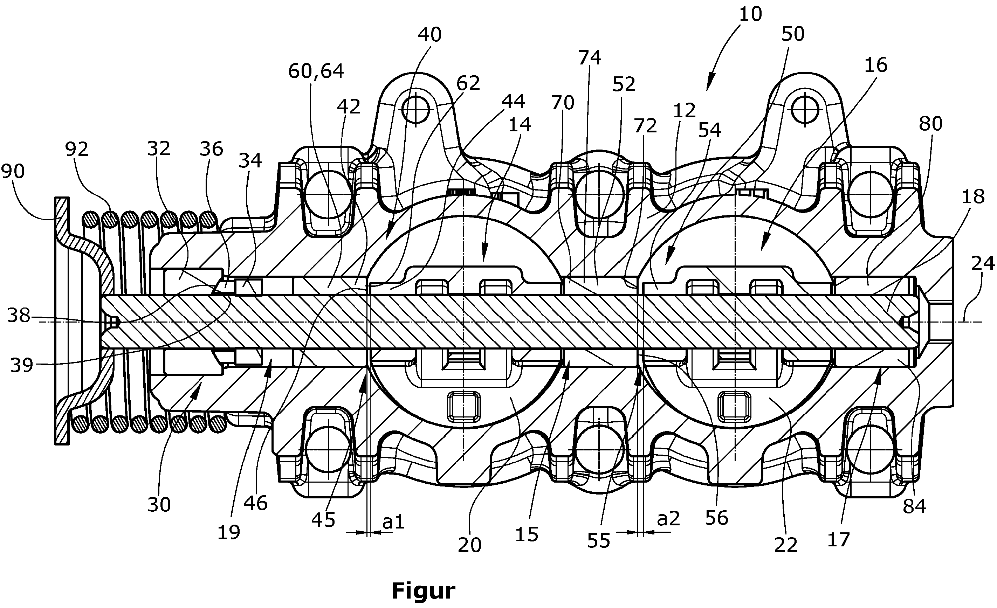

Ein Ausführungsbeispiel einer erfindungsgemäßen Klappenvorrichtung für einen Verbrennungsmotor ist in der Figur dargestellt und wird nachfolgend beschrieben.

Figur zeigt eine Schnittansicht einer erfindungsgemäßen Klappenvorrichtung.

Die Figur zeigt eine Klappenvorrichtung 10 für einen Verbrennungsmotor eines Kraftfahrzeugs, wobei die Klappenvorrichtung 10 als Abgasklappenvorrichtung ausgeführt ist und beispielsweise als Abgasstauklappe oder als Abgasrückführventil dient.

Die Klappenvorrichtung 10 umfasst ein Strömungsgehäuse 12, welches eine ersten Strömungskanal 14 und einen zweiten Strömungskanal 16 begrenzt. Das Strömungsgehäuse 12 ist auch einem metallischen Werkstoff hergestellt.

Die Klappenvorrichtung 10 weist weiterhin eine am Strömungsgehäuse 12 drehbar gelagerte Klappenwelle 18 auf, an welcher zwei Klappenkörper 20, 22 befestigt sind, wobei ein erster Klappenkörper 20 in dem ersten Strömungskanal 14 angeordnet ist und der zweite Klappenkörper 22 in dem zweiten Strömungskanal 16 angeordnet ist. Die Klappenwelle 18 ist einstückig ausgeführt und erstreckt sich durch die beiden Strömungskanäle 14, 16, wobei das Strömungsgehäuse 12 hierbei zwischen den beiden Strömungskanälen 14, 16 eine Querbohrung 15, an einer dem ersten Strömungskanal 14 abgewandten Seite des zweiten Strömungskanals 16 eine Sacklochbohrung 17 und an einer dem zweiten Strömungskanal 16 abgewandten Seite des ersten Strömungskanals 14 eine Durchgangsbohrung 19 aufweist. Die Klappenwelle 18 ragt aus der Durchgangsbohrung 19 aus dem Strömungsgehäuse 12 heraus, wobei an dem herausragenden Abschnitt der Klappenwelle 18 ein in der Figur nicht gezeigter Aktor angreift, durch welchen die Klappenwelle 18 und die Klappenkörper 20, 22 zwischen unterschiedlichen Stellungen verdreht werden können. Durch die Verstellung der Klappenwelle 18 und der Klappenkörper 20, 22 können die durch den jeweiligen Klappenkörper 20, 22 und eine Innenumfangsfläche der Strömungskanäle 14, 16 definierter Durchströmungsquerschnitt verändert werden, wobei durch die Befestigung der Klappenkörper 20, 22 an einer einzigen Klappenwelle 18 die Verstellung des Durchströmungsquerschnitts in beiden Strömungskanälen 14, 16 zwingenderweise gleichzeitig erfolgt.

Die Klappenwelle 18 ist drehbar, d.h. radial, an dem Strömungsgehäuse 12 gelagert. Hierfür ist in der Querbohrung 15, in der Sacklochbohrung 17 und in der Durchgangsbohrung 19 jeweils ein Radiallager 60, 70, 80 in Form einer Lagerhülse 64, 74, 84 vorgesehen, wobei die Klappenwelle 18 über die Lagerhülsen 64, 74, 84 am Strömungsgehäuse 12 in Axial- und in Radialrichtung gelagert ist.

Die Klappenwelle 18 ist außerdem axial an dem Strömungsgehäuse 12 gelagert. Hierfür sind drei Axiallager 30, 40, 50 vorgesehen.

Ein erstes Axiallager 30 weist ein Lagerelement 32, ein Gegenlagerelement 34 und ein Keramikelement 36 auf. Das Lagerelement 32 ist innerhalb der Durchgangsöffnung 19 angeordnet und am Strömungsgehäuse 12 befestigt. Das Lagerelement 32 weist einen kreisringförmigen Querschnitt auf und ist über eine Außenumfangsfläche in das Strömungsgehäuse 12 eingepresst, so dass das Lagerelement 32 am Strömungsgehäuse 12 zumindest in Axialrichtung fest angeordnet ist. Das Gegenlagerelement 34 ist an der Klappenwelle 18 befestigt, beispielsweise über eine Pressverbindung. Das Keramikelement 36 ist zwischen dem Lagerelement 32 und dem Gegenlagerelement 34 angeordnet und an einer dem Lagerelement 32 zugewandten Seite des Gegenlagerelements 34 befestigt. Das Keramikelement 36 weist eine konische Anlagefläche 38 auf, welche im endmontierten Zustand an einer dazu komplementären, konischen Gegenanlagefläche 39 des Lagerelements 32 anliegt. Durch die konische Ausführung der Anlageflächen 38, 39 kann die sich berührende Fläche vergrößert werden und dadurch die Abdichtung verbessert werden.

Das zweite Axiallager 40 und das dritte Axiallager 50 weisen ebenfalls jeweils ein Lagerelement 42, 52 und ein Gegenlagerelement 44, 54 auf. Die Lagerelemente 42, 52 bilden die als Lagerhülsen 64, 74 ausgeführten Radiallager 60, 70. Die Gegenlagerelemente 44, 54 bilden die beiden Klappenkörper 20, 22, wobei die Klappenkörper 20, 22 jeweils eine axiale Anlagefläche 46, 56 aufweisen und die Lagerhülsen 64, 74 jeweils eine zu der entsprechenden Anlagefläche 46, 56 korrespondierende Stirnseite 62, 72 aufweisen.

An dem herausragenden Abschnitt der Klappenwelle 18 ist ein Federaufnahmeelement 90 befestigt, wobei zwischen dem Federaufnahmeelement 90 und dem Strömungsgehäuse 12 ein Federelement 92 vorgespannt angeordnet ist. Das Federelement 92 bewirkt eine derartige Belastung auf die Klappenwelle 18, dass die Gegenlagerelemente der Axiallager 30, 40, 50 in Richtung der Lagerelemente der Axiallager 30, 40, 50 belastet werden.

Im Neuzustand der Klappenvorrichtung 10 ist die Klappenwelle 18 ausschließlich durch das erste Axiallager 30 axial gelagert, wobei während des Betriebs der Klappenvorrichtung 10 das Gegenlagerelement 34 am Lagerelement 32 dauerhaft und durch das Federelement 92 angedrückt anliegt. Das zweite Axiallager 40 und das dritte Axiallager 50 dienen im Neuzustand der Klappenvorrichtung 10 nicht der Axiallagerung der Klappenwelle 18, da die Gegenlagerelemente 44, 54 von den Lagerelementen 42, 52 axial beabstandet sind. Dabei liegt zwischen dem Lagerelement 42 und dem Gegenlagerelement 44 des zweiten Axiallagers 40 ein Spalt 45 mit der Spaltbreite a1 und zwischen dem Lagerelement 52 und dem Gegenlagerelement 54 ein Spalt 55 mit einer Spaltbreite a2 vor. Die Spaltbreite a2 ist größer als die Spaltbreite a1.

Im Betrieb der Klappenvorrichtung 10 verschleißen das Lagerelement 32 und/oder das Gegenlagerelement 34 an den relativ zueinander bewegenden Anlageflächen, wodurch sich die Klappenwelle 18 und damit die Gegenlagerelemente 44, 54 um den Verschleißbetrag axial verlagern. Sobald der Verschleißbetrag der Spaltbreite a1 entspricht, kommt es zur Anlage zwischen dem Lagerelement 42 und dem Gegenlagerelement 44 des zweiten Axiallagers 40, so dass die Klappenwelle 18 zusätzlich durch das zweite Axiallager 40 axial gelagert wird. Während des anschließenden Betriebs der Klappenvorrichtung 10 verschleißen die Lagerelemente 32, 42 und/oder die Gegenlagerelemente 44, 54 des ersten Axiallagers 30 und des zweiten Axiallagers 40. Sobald der Verschleißbetrag der Spaltbreite a2 entspricht, kommen auch das Lagerelement 52 und das Gegenlagerelement 54 zur Anlage, so dass die Klappenwelle 18 zusätzlich zum ersten und zweiten Axiallager 30, 40 auch durch das dritte Axiallager 50 axial gelagert wird.

Auf diese Weise kann die verschleißbedingte Verlagerung der Klappenwelle 18 über die Lebensdauer reduziert werden, wodurch die Durchströmungsquerschnitte der Strömungskanäle 14, 16 zuverlässig vollständig geschlossen werden können und ein Verklemmen der Klappenkörper 20, 22 bei der Verstellung zuverlässig verhindert werden können.

Es sollte deutlich sein, dass der Schutzbereich des Hauptanspruchs nicht auf das beschriebene Ausführungsbeispiel begrenzt ist, sondern verschiedene Modifikationen möglich sind.

## Patentansprüche

1. Klappenvorrichtung für einen Verbrennungsmotor, mit einem Strömungsgehäuse (12), welches mindestens einen Strömungskanal (14, 16) begrenzt,
einer Klappenwelle (18), welche radial und axial am Strömungsgehäuse (12) gelagert ist, und
mindestens einem Klappenkörper (20, 22), welcher an der Klappenwelle (18) gelagert ist und im Strömungskanal (14, 16) angeordnet ist, wobei der Klappenkörper (20, 22) gemeinsam mit der Klappenwelle (18) um eine Längsachse (24) der Klappenwelle (18) zwischen unterschiedlichen Stellungen verdrehbar ist,
wobei
die Klappenwelle (18) über ein erstes Axiallager (30) und ein zweites Axiallager (40) am Strömungsgehäuse (12) axial gelagert ist, wobei beide Axiallager (30, 40) jeweils ein am Strömungsgehäuse (12) vorgesehenes Lagerelement (32, 42) und ein an der Klappenwelle (18) vorgesehenes Gegenlagerelement (34, 44) aufweisen, und wobei das erste Axiallager (30) und das zweite Axiallager (40) derart ausgeführt sind, dass das Gegenlagerelement (34) und das Lagerelement (32) des ersten Axiallagers (30) dauerhaft axial aneinander anliegen und das Gegenlagerelement (44) und das Lagerelement (42) des zweiten Axiallager (40) zunächst axial voneinander beabstandet sind und erst bei einem fortgeschrittenen Verschleiß des Lagerelements (32) und/oder des Gegenlagerelements (34) des ersten Axiallagers (30) und einer durch den Verschleiß des ersten Axiallagers (30) verursachten Axialverlagerung der Klappenwelle (18) und des Gegenlagerelements (44) des zweiten Axiallagers (40) axial aneinander anliegen.

2. Klappenvorrichtung nach Anspruch 1,
**dadurch gekennzeichnet, dass**
ein Radiallager (60) zur radialen Lagerung der Klappenwelle (18) vorgesehen ist, welches das Lagerelement (42) des zweiten Axiallagers (40) bildet, wobei eine Stirnseite (62) des Radiallagers (60) mit einer axialen Anlagefläche (46) des Gegenlagerelements (44) des zweiten Axiallagers (40) zusammenwirkt.

3. Klappenvorrichtung nach Anspruch 2,
**dadurch gekennzeichnet, dass**
das Radiallager (60) als Gleitlager ausgeführt ist und eine Lagerhülse (64) umfasst, wobei die Lagerhülse (64) an dem Strömungsgehäuse (12) fest angeordnet ist.

4. Klappenvorrichtung nach einem der vorhergehenden Ansprüche, **dadurch gekennzeichnet, dass**
der Klappenkörper (20) das Gegenlagerelement (44) des zweiten Axiallagers (40) bildet, wobei der Klappenkörper (20) die dem Lagerelement (42) des zweiten Axiallagers (40) axial zugewandte Anlagefläche (46) aufweist.

5. Klappenvorrichtung nach einem der vorhergehenden Ansprüche, **dadurch gekennzeichnet, dass**
das Gegenlagerelement (34) an einer dem Lagerelement (32) zugewandten Seite ein Keramikelement (36) aufweist.

6. Klappenvorrichtung nach Anspruch 5,
**dadurch gekennzeichnet, dass**
das Keramikelement (36) eine konisch Anlagefläche (38) aufweist, welche an einer am Lagerelement (32) vorgesehenen, konischen Gegenanlagefläche (39) anliegt.

7. Klappenvorrichtung nach einem der vorhergehenden Ansprüche, **dadurch gekennzeichnet, dass**
an der Klappenwelle (18) ein erster Klappenkörper (20) und ein zweiter Klappenkörper (22) befestigt sind, wobei der erste Klappenkörper (20) in einem ersten, durch das Strömungsgehäuse (12) begrenzten Strömungskanal (14) angeordnet ist und der zweite Klappenkörper (22) in einem zweiten, durch das Strömungsgehäuse (12) begrenzten Strömungskanal (16) angeordnet ist, wobei ein drittes Axiallager (50) vorgesehen ist, welches derart ausgeführt ist, dass ein Gegenlagerelement (54) und ein Lagerelement (52) des dritten Axiallagers (50) zunächst voneinander beabstandet sind und erst bei einem fortgeschrittenen Verschleiß der Lagerelemente (32, 42) und/oder der Gegenlagerelements (34, 44) des ersten Axiallagers (30) und des zweiten Axiallagers (40) und einer durch den Verschleiß verursachten Axialverlagerung der Klappenwelle (18) und des Gegenlagerelements (54) des dritten Axiallagers (50) aneinander anliegen.

8. Klappenvorrichtung nach Anspruch 7,
**dadurch gekennzeichnet, dass**
ein zweites Radiallager (70) vorgesehen ist, wobei das zweite Radiallager (70) das Lagerelement (52) des dritten Axiallagers (50) bildet und der zweite Klappenkörper (22) das Gegenlagerelement (54) des dritten Axiallagers (50) bildet, wobei eine axial Anlagefläche (56) des zweiten Klappenkörpers (22) mit einer dem zweiten Klappenkörper (22) zugewandten, axialen Anlagefläche (72) des zweiten Radiallagers (70) zusammenwirkt.

9. Klappenvorrichtung nach Anspruch 8,
**dadurch gekennzeichnet, dass**
ein drittes Radiallager (80) vorgesehen ist, wobei der erste Klappenkörper (20) axial zwischen dem ersten Radiallager (60) und dem zweiten Radiallager (70) angeordnet ist und der zweite Klappenkörper (22) axial zwischen dem zweiten Radiallager (70) und dem dritten Radiallager (80) angeordnet ist.

10. Klappenvorrichtung nach einem der vorhergehenden Ansprüche, **dadurch gekennzeichnet, dass**
an einem aus dem Strömungsgehäuse (12) herausragenden Ende der Klappenwelle (18) ein Federaufnahmeelement (90) befestigt ist, wobei zwischen dem Federaufnahmeelement (90) und dem Strömungsgehäuse (12) ein Federelement (92) derart vorgespannt angeordnet ist, dass die Gegenlagerelemente (34, 44, 54) axial in Richtung der Lagerelemente (32, 42, 52) der Axiallager (30, 40, 50) belastet werden.

11. Klappenvorrichtung nach einem der vorhergehenden Ansprüche, **dadurch gekennzeichnet, dass**
der Strömungskanal (14, 16) ein Abgasströmungskanal ist.

## Claims

1. A flap device for an internal combustion engine, having
a flow housing (12), which delimits at least one flow duct (14, 16),
a flap shaft (18), which is mounted radially and axially on the flow housing (12), and
at least one flap body (20, 22) which is mounted on the flap shaft (18) and is arranged in the flow duct (14, 16), wherein the flap body (20, 22) is rotatable together with the flap shaft (18) about a longitudinal axis (24) of the flap shaft (18) between different positions,
wherein
the flap shaft (18) is mounted axially on the flow housing (12) via a first axial bearing (30) and a second axial bearing (40), wherein the two axial bearings (30, 40) each have a bearing element (32, 42), which is provided on the flow housing (12), and a counter-bearing (34, 44), which is provided on the flap shaft (18), and wherein the first axial bearing (30) and the second axial bearing (40) are designed in such a manner that the counter-bearing element (34) and the bearing element (32) of the first axial bearing (30) permanently lie axially against each other, and the counter-bearing element (44) and the bearing element (42) of the second axial bearing (40) are first of all spaced apart axially from each other and lie axially against each other only in the event of advanced wear of the bearing element (32) and/or of the counter-bearing element (34) of the first axial bearing (30) and an axial shifting of the flap shaft (18) and of the counter-bearing element (44) of the second axial bearing (40) caused by the wear of the first axial bearing (30).

2. The flap device according to Claim 1,
**characterized in that**
a radial bearing (60) is provided for the radial bearing of the flap shaft (18), which forms the bearing element (42) of the second axial bearing (40), wherein a face side (62) of the radial bearing (60) interacts with an axial contact surface (46) of the counter-bearing element (44) of the second axial bearing (40).

3. The flap device according to Claim 2,
**characterized in that**
the radial bearing (60) is designed as a sliding bearing and comprises a bearing sleeve (64), wherein the bearing sleeve (64) is securely arranged on the flow housing (12).

4. The flap device according to one of the preceding claims,
**characterized in that**
the flap body (20) forms the counter-bearing element (44) of the second axial bearing (40), wherein the flap body (20) has the contact surface (46) axially facing the bearing element (42) of the second axial bearing (40).

5. The flap device according to one of the preceding claims,
**characterized in that**
the counter-bearing element (34) has a ceramic element (36) on a side facing the bearing element (32).

6. The flap device according to Claim 5,
**characterized in that**
the ceramic element (36) has a conical contact surface (38), which lies against a conical counter-contact surface (39) provided on the bearing element (32).

7. The flap device according to one of the preceding claims,
**characterized in that**
a first flap body (20) and a second flap body (22) are fastened to the flap shaft (18), wherein the first flap body (20) is arranged in a first flow duct (14) delimited by the flow housing (12), and the second flap body (22) is arranged in a second flow duct (16) delimited by the flow housing (12), wherein a third axial bearing (50) is provided, which is designed in such a manner that a counter-bearing element (54) and a bearing element (52) of the third axial bearing (50) are first of all spaced apart from each other and lie axially against each other only in the event of advanced wear of the bearing elements (32, 42) and/or of the counter-bearing element (34, 44) of the first axial bearing (30) and of the second axial bearing (40) and an axial shifting of the flap shaft (18) and of the counter-bearing element (54) of the third axial bearing (50) caused by the wear.

8. The flap device according to Claim 7,
**characterized in that**
a second radial bearing (70) is provided, wherein the second radial bearing (70) forms the bearing element (52) of the third axial bearing (50), and the second flap body (22) forms the counter-bearing element (54) of the third axial bearing (50), wherein an axial contact surface (56) of the second flap body (22) interacts with an axial contact surface (72) of the second radial bearing (70) facing the second flap body (22).

9. The flap device according to Claim 8,
**characterized in that**
a third radial bearing (80) is provided, wherein the first flap body (20) is arranged axially between the first radial bearing (60) and the second radial bearing (70), and the second flap body (22) is arranged axially between the second radial bearing (70) and the third radial bearing (80).

10. The flap device according to one of the preceding claims,
**characterized in that**
a spring receiving element (90) is fastened at an end of the flap shaft (18) projecting out from the flow housing (12), wherein between the spring receiving element (90) and the flow housing (12) a spring element (92) is arranged in a pre-stressed manner in such a manner that the counter-bearing elements (34, 44, 54) are loaded axially in the direction of the bearing elements (32, 42, 52) of the axial bearings (30, 40, 50).

11. The flap device according to one of the preceding claims,
**characterized in that**
the flow duct (14, 16) is an exhaust gas flow duct.

## Revendications

1. Dispositif à clapet pour un moteur à combustion interne, avec
un boîtier d'écoulement (12) qui limite au moins un canal d'écoulement (14, 16),
un arbre de clapet (18) qui est monté radialement et axialement sur le boîtier d'écoulement (12), et
au moins un corps de clapet (20, 22) qui est logé sur l'arbre de clapet (18) et disposé dans le canal d'écoulement (14, 16), dans lequel le corps de clapet (20, 22) peut être tourné conjointement avec l'arbre de clapet (18) autour d'un axe longitudinal (24) de l'arbre de clapet (18) entre différentes positions,
dans lequel l'arbre de clapet (18) est monté axialement sur le boîtier d'écoulement (12) par l'intermédiaire d'un premier palier axial (30) et d'un deuxième palier axial (40), dans lequel les deux paliers axiaux (30, 40) présentent respectivement un élément de palier (32, 42) prévu sur le boîtier d'écoulement (12) et un élément de contre-palier (34, 44) prévu sur l'arbre de clapet (18), et dans lequel le premier palier axial (30) et le deuxième palier axial (40) sont réalisés de sorte que l'élément de contre-palier (34) et l'élément de palier (32) du premier palier axial (30) soient en contact axial permanent l'un avec l'autre et que l'élément de contre-palier (44) et l'élément de palier (42) du deuxième palier axial (40) soient d'abord éloignés axialement l'un de l'autre et ne soient en contact axial l'un avec l'autre qu'en cas d'usure avancée de l'élément de palier (32) et/ou de l'élément de contre-palier (34) du premier palier axial (30) et d'un déplacement axial de l'arbre de clapet (18) et de l'élément de contre-palier (44) du deuxième palier axial (40) causé par l'usure du premier palier axial (30).

2. Dispositif à clapet selon la revendication 1,
**caractérisé en ce que**
un palier radial (60) est prévu pour le palier radial de l'arbre de clapet (18), lequel forme l'élément de palier (42) du deuxième palier axial (40), dans lequel une face frontale (62) du palier radial (60) coopère avec une surface d'appui axiale (46) de l'élément de contre-palier (44) du deuxième palier axial (40).

3. Dispositif à clapet selon la revendication 2,
**caractérisé en ce que**
le palier radial (60) est réalisé en tant que palier lisse et comprend un manchon de palier (64), dans lequel le manchon de palier (64) est agencé de manière fixe sur le boîtier d'écoulement (12).

4. Dispositif à clapet selon l'une quelconque des revendications précédentes,
**caractérisé en ce que**
le corps de clapet (20) forme l'élément de contre-palier (44) du deuxième palier axial (40), dans lequel le corps de clapet (20) présente la surface d'appui (46) orientée axialement vers l'élément de palier (42) du deuxième palier axial (40).

5. Dispositif à clapet selon l'une quelconque des revendications précédentes,
**caractérisé en ce que**
l'élément de contre-palier (34) présente un élément céramique (36) sur un côté orienté vers l'élément de palier (32).

6. Dispositif à clapet selon la revendication 5,
**caractérisé en ce que**
l'élément céramique (36) présente une surface d'appui conique (38) qui repose sur une contre-surface d'appui conique (39) prévue sur l'élément de palier (32).

7. Dispositif à clapet selon l'une quelconque des revendications précédentes,
**caractérisé en ce que**
un premier corps de clapet (20) et un deuxième corps de clapet (22) sont fixés à l'arbre de clapet (18), dans lequel le premier corps de clapet (20) est disposé dans un premier canal d'écoulement (14) délimité par le boîtier d'écoulement (12) et le deuxième corps de clapet (22) est disposé dans un deuxième canal d'écoulement (16) délimité par le boîtier d'écoulement (12), dans lequel un troisième palier axial (50) est prévu, lequel est réalisé de sorte qu'un élément de contre-palier (54) et un élément de palier (52) du troisième palier axial (50) soient d'abord éloignés l'un de l'autre et ne reposent l'un contre l'autre qu'en cas d'usure avancée des éléments de palier (32, 42) et/ou des éléments de contre-palier (34, 44) du premier palier axial (30) et du deuxième palier axial (40) et d'un déplacement axial de l'arbre de clapet (18) et de l'élément de contre-palier (54) du troisième palier axial (50) causé par l'usure.

8. Dispositif à clapet selon la revendication 7,
**caractérisé en ce que**
un deuxième palier radial (70) est prévu, dans lequel le deuxième palier radial (70) forme l'élément de palier (52) du troisième palier axial (50) et le deuxième corps de clapet (22) forme l'élément de contre-palier (54) du troisième palier axial (50), dans lequel une surface de contact axial (56) du deuxième corps de clapet (22) interagit avec une surface de contact axial (72) du deuxième palier radial (70) orientée vers le deuxième corps de clapet (22).

9. Dispositif à clapet selon la revendication 8,
**caractérisé en ce que**
un troisième palier radial (80) est prévu, dans lequel le premier corps de clapet (20) est disposé axialement entre le premier palier radial (60) et le deuxième palier radial (70) et le deuxième corps de clapet (22) est disposé axialement entre le deuxième palier radial (70) et le troisième palier radial (80).

10. Dispositif à clapet selon l'une quelconque des revendications précédentes,
**caractérisé en ce que**
un élément de réception de ressort (90) est fixé à une extrémité de l'arbre de clapet (18) faisant saillie à partir du boîtier d'écoulement (12), dans lequel un élément de ressort (92) est disposé précontraint entre l'élément de réception de ressort (90) et le boîtier d'écoulement (12) de sorte que les éléments de contre-palier (34, 44, 54) puissent être chargés axialement en direction des éléments de palier (32, 42, 52) des paliers axiaux (30, 40, 50).

11. Dispositif à clapet selon l'une quelconque des revendications précédentes,
**caractérisé en ce que**
le canal d'écoulement (14, 16) est un canal d'écoulement de gaz d'échappement.
